# FASCICULE DE BREVET EUROPEEN

(11) **EP 0 807 753 B1**
(45) Date de publication et mention de la délivrance du brevet: **04.09.2002**
(21) Numéro de dépôt: 97401077.9
(22) Date de dépôt: 15.05.1997
(51) Int. Cl.: F02K 1/70

(54) **Inverseur de poussée de turboréacteur à portes associées à un panneau avant**
Schubumkehrvorrichtung eines Strahltriebwerkes mit an der Vorseite der Klappen verbundenem Wandteil
A thrust reverser for a jet engine with doors associated with a front liner.

(30) Priorité: 15.05.1996 FR 9606045
(43) Date de publication de la demande: 19.11.1997
(73) Titulaire: HUREL-HISPANO LE HAVRE, 76700 Harfleur (FR)
(72) Inventeur: Gonidec, Patrick, 76290 Montvilliers (FR); Rouyer, Pascal, Gérard, 76430 Saint Aubin Routot (FR); Vauchel, Guy, Bernard, 76610 Le Havre (FR)
(74) Mandataire: Berrou, Paul

(56) Documents cités:
- EP-A- 0 413 635

## Description

La présente invention concerne un dispositif d'inversion de poussée de turboréacteur à double flux. Le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autres cas, la paroi externe ne canalise que le flux secondaire, dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la traînée de l'ensemble propulsif. Ceci est notamment le cas pour des ensembles propulsifs rapportés sur l'extérieur d'aéronef, particulièrement lorsque ces ensembles propulsifs sont attachés sous les ailes ou à l'arrière du fuselage.

Nous appellerons capotage extérieur l'ensemble constitué par la paroi extérieure de la nacelle.

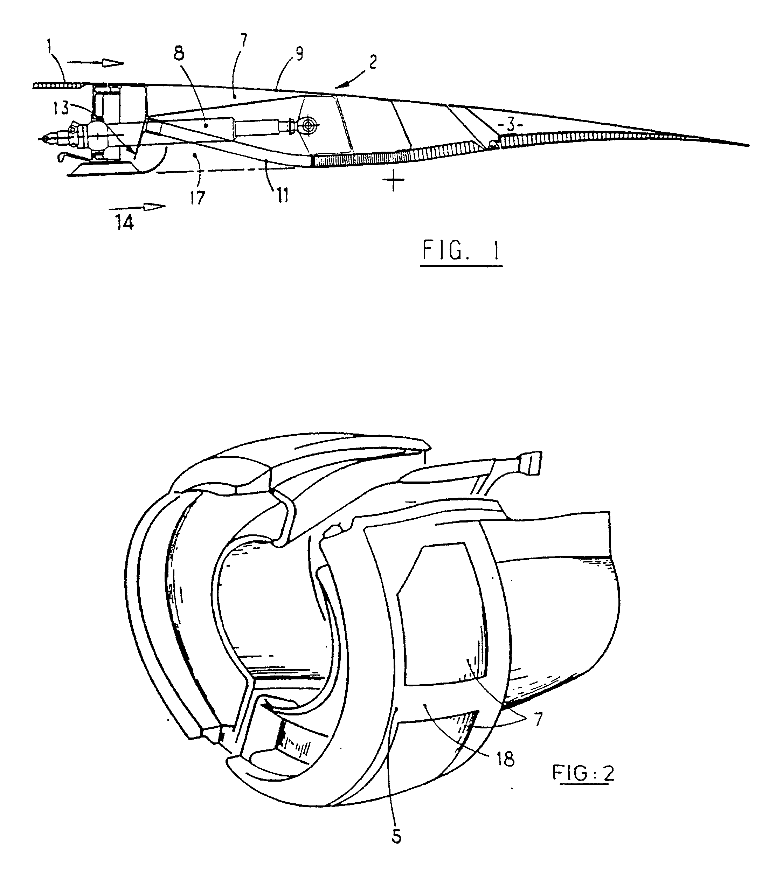

La figure 1 des dessins joints montre un exemple connu de réalisation d'un inverseur de poussée de ce type, appliqué comme le montre la vue schématique partielle en perspective de la figure 2, à un turboréacteur à double flux.

Le dispositif d'inversion est constitué de portes 7 formant une partie mobile 2 et constituant en position inactive, lors d'un fonctionnement en jet direct, une partie du capotage extérieur, et d'une structure fixe réalisant ce capotage extérieur en amont des portes, par une partie amont 1 en aval des portes par une partie aval 3 et entre les portes 7 par l'intermédiaire de poutres 18 qui relient la partie aval 3 du capotage extérieur à la partie amont 5 du capotage extérieur. Les portes 7 sont montées sur une circonférence du capotage extérieur et sont montées pivotantes dans une zone intermédiaire de leurs parois latérales sur les poutres 18 situées de part et d'autre de ces portes, ces parois latérales constituant avec les parois amont et aval, les parois qui relient la partie extérieure 9 des portes 7, qui constituent une partie de la paroi extérieure de la nacelle, à la partie intérieure 11 des portes 7, qui constituent une partie de la paroi extérieure du conduit.

La partie amont 1 de structure fixe comporte un cadre avant 6 qui sert de support aux moyens de commande des déplacements des portes 7, constitués par exemple par des vérins 8.

En position activée, les portes 7 basculent de telle façon que la partie des portes situées en aval des pivots, vient obstruer plus ou moins totalement le conduit, et de telle façon que la partie amont des portes vient dégager un passage dans le capotage extérieur de manière à permettre au flux secondaire d'être canalisé radialement par rapport à l'axe du conduit. La partie amont des portes 7 fait saillie à l'extérieur du capotage extérieur pour des raisons de dimensionnement du passage qui doit être capable de laisser passer ce flux sans compromettre le fonctionnement du moteur. L'angle de pivotement des portes est ajusté de manière à permettre le passage du flux et de manière à supprimer la poussée de ce flux, voire à commencer à générer une contre poussée en générant une composante du flux dévié vers l'amont.
Les portes 7 sont également munies dans leur partie amont d'un becquet 13 faisant saillie vers l'avant, lorsque les portes 7 sont déployées, par rapport à la face interne des portes, de manière à dévier le flux vers l'amont et achever d'obtenir la composante de contre poussée.

Des exemples connus de réalisation sont illustrés par exemple par FR 1 482 538 ou par FR-A-2 030 034.

Il existe aussi des dispositifs tels que celui décrit par US 3 605 411 qui permettent d'avoir une saillie de becquet vers l'amont lorsque les portes sont déployées tout en permettant une continuité de la paroi externe du conduit lorsque les portes ne sont pas déployées. On connaît également par FR-A-2 618 853 un dispositif où le becquet est escamoté en jet direct de façon à optimiser les performances du moteur.

Dans certaines applications, comme représenté sur la figure 1, les becquets 13 font saillie par rapport à la face interne 11 des portes 7, même en jet direct sans pour autant faire saillie dans le conduit qui est dans cet exemple muni de cavités 17 légèrement préjudiciables aux performances du moteur alors que le dispositif d'inversion devient extrêmement simple.

La combinaison des becquets et des bords de déviation permettent également d'optimiser la direction d'éjection du flux comme indiqué par FR-A-2 680 547.

Enfin la commande des portes d'une position à une autre par vérin est connue en soi, nous noterons cependant la solution très simple où il y a un vérin par porte fixé dans sa partie amont à la structure fixe amont du capotage extérieur, et dans sa partie aval à la porte en un point situé dans la partie amont comme décrit par exemple par FR 1 482 538.

Le type d'inverseur de poussée décrit ci-dessus a l'inconvénient majeur que, pour des raisons imposées par des contraintes de dimensionnement aérodynamique du passage du flux dans les passages dégagés par la partie amont de ces portes, la pression du conduit exerce sur ces portes une action qui tend à les ouvrir, en effet, la section totale de ces passages doit être supérieure à la section du conduit dans un plan situé en amont des portes, ceci à cause des pertes en charge engendrées par la déviation du flux, ceci dans le cas où la section de fuite (partie aval du conduit non obstruée par la partie aval des portes), est minimisée de façon à obtenir une contre poussée convenable.

L'inconvénient majeur décrit ci-dessus se traduit suivant les deux aspects suivants :
- le fait que les portes tendent à s'ouvrir est un inconvénient du point de vue de la sécurité. Des portes sur lesquelles l'action de la pression tendrait à les maintenir fermées (non déployées), rendrait le dispositif plus sûr, de même que des portes sur lesquelles l'action de la pression tendrait à les refermer lorsque celles-ci sont dans une position telle que la poussée n'est pas encore inversée, même si elle est partiellement détruite (nous reviendrons sur ce dernier point)
- l'action de la pression sur les portes est dans certains exemples connus telle que dans certains cas à prendre en compte dans le dimensionnement de l'inverseur, des efforts très importants transitent dans les vérins entre leurs points d'attache sur la partie amont de la structure fixe et sur les portes. Il en résulte une masse importante de la structure, du système de commande des portes et de verrouillage de celles-ci, et des portes elles-mêmes.

L'objet de l'invention est de proposer un moyen qui permet d'accroître la sécurité et/ou de réduire la masse de ce type d'inverseur ou en améliorer les performances en jet inversé.

EP-A-0 413 635 décrit un inverseur à portes associées à un panneau amont, à pivots fixes situés dans les parties latérales ou poutres de la structure fixe de l'inverseur et entraîné par la porte au moyen d'un organe de liaison ou bielle dans le même sens de rotation que lesdites portes. Cette disposition a l'inconvénient majeur de faire "bouclier" au flux en mode jet inversé et de ne pas permettre un guidage optimal du flux.
Les buts sont atteints conformément à l'invention par un inverseur de poussée à portes pivotantes du type précité caractérisé en ce que le panneau amont est supporté le long d'un côté latéral par un axe de rotation placé dans un sens longitudinal et solidaire de la structure fixe de l'inverseur et est entraîné par un ensemble de bielles comportant au moins une articulation solidaire de la porte, une articulation portée par la structure fixe de l'inverseur et une articulation solidaire dudit panneau amont de manière que le déplacement du panneau amont s'effectue suivant un pivotement latéral par rapport audit axe de rotation.
D'autre caractéristiques et avantages de l'invention seront mieux compris à la lecture de la description qui va suivre des modes de réalisation de l'invention en référence aux dessins annexés sur lesquels :
- la figure 1 représente une demi-vue schématique, en coupe longitudinale par un plan passant par l'axe de rotation d'un turboréacteur associé, d'un inverseur de poussée à portes pivotantes, en position fermée, d'un type connu et qui a fait précédemment l'objet d'une description ;
- la figure 2 représente une vue schématique en perspective d'un inverseur de poussée du type précité montré en position monté et avec les portes fermées ;
- la figure 3 représente dans une vue analogue à celle de la figure 1, un inverseur de poussée à portes pivotantes, en position de jet direct, selon un premier mode de réalisation de l'invention ;
- la figure 4 représente le principe défini sur la figure 3 en position de jet inversé ;
- la figure 5 représente une section transversale du principe défini sur les figures 3 et 4 ;
- la figure 6 représente une variante du principe défini sur la figure 3 ;
- la figure 7 représente le principe défini sur la figure 6 en position jet inversé ;
- la figure 8 représente dans une vue analogue à la figure 1, un inverseur de poussée à portes pivotantes, en position de jet direct, selon un deuxième mode de réalisation de l'invention ;
- la figure 9 représente le principe défini sur la figure 8 en position jet inversé ;
- la figure 10 représente une section transversale du principe défini sur les figures 8 et 9 ;
- la figure 11 représente une section transversale analogue à celle de la figure 10, selon une variante de réalisation ;
- la figure 12 représente dans une vue analogue à la figure 1, un autre type de cinématique associée à deux demi panneaux ;
- la figure 13 représente le principe défini sur la figure 12 en position jet inversé ;
- la figure 14 représente une section transversale du principe défini sur les figures 12 et 13 ;
- la figure 15 représente une section transversale d'un inverseur de poussée conforme à l'invention selon une variante de réalisation.

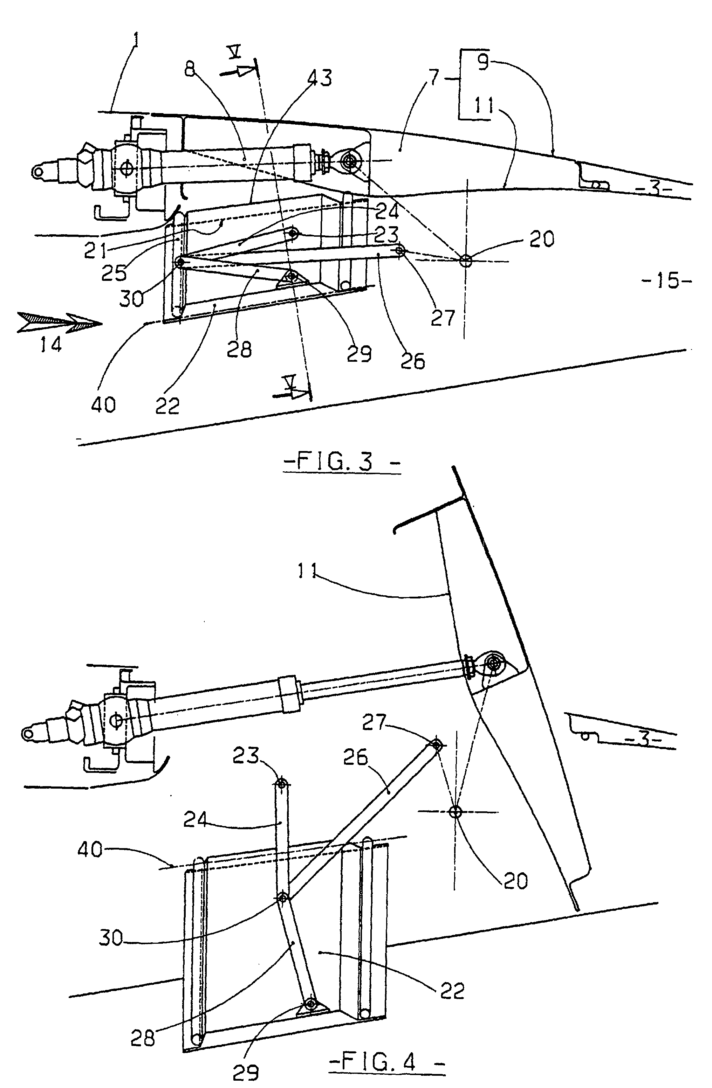

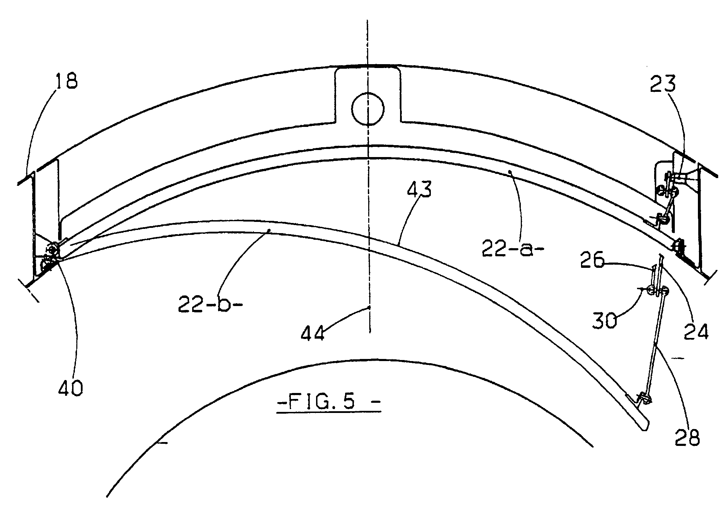

Selon un premier mode de réalisation de l'invention représenté sur les figures 3 et 4, un inverseur de poussée susceptible d'effectuer dans les phases de vol pertinentes d'un avion une inversion de flux du turboréacteur associé comporte les parties principales connues et précédemment décrites dans un exemple connu de réalisation, en référence aux figures 1 et 2. On retrouve notamment la structure fixe amont 1, les portes 7 comportant la partie extérieure 9, la partie intérieure 11, un becquet 13 et associées à un vérin de commande 8, et la partie aval 3.

Comme précédemment décrit selon EP-A-0 413 635, le lissage de veine en jet direct est obtenu au moyen d'un panneau amont 22 dont la paroi interne 21 forme une partie de la veine externe du canal annulaire 15.

L'étanchéité est assurée par un joint 25 placé entre le panneau amont 22, une partie de la structure fixe 1 et une partie de la porte 7. Les exemples montrés représentent ce joint installé sur le panneau amont 22 mais il faut noter qu'un montage inversé peut être aussi utilisé, c'est à dire que la partie de la structure fixe 1 et la partie de la porte 7 peuvent recevoir et contenir, dans une position permettant la continuité des lignes, le ou les joints.

Un des côtés latéral du panneau amont 22 est relié à la structure fixe par l'intermédiaire d'un axe de rotation 40, généralement situé au niveau des poutres de l'inverseur. Un ensemble de bielles 24, 26 et 28, maintient ledit panneau 22 en position jet inversé ou jet direct, ces dernières étant situées du côté opposé au côté articulé du panneau, dans une zone comprise entre le pivot 20 de la porte 7 et l'amont de la poutre 18.

La figure 4 montre un exemple de réalisation de la cinématique d'entraînement du panneau amont 22. La bielle 26 solidaire de la porte au point pivot 27, est reliée aux bielles 24 et 28 au pivot 30. La bielle 24 a l'une de ses extrémités solidaire de la structure fixe au point pivot 23, l'autre extrémité étant reliée à la bielle 28 au point pivot 30. La bielle 28 est solidaire du panneau amont 22 au point pivot 29. Toutes les extrémités des bielles 24, 26 et 28 sont équipées de liaisons rotulantes. De plus, le sens de rotation du panneau amont 22 permet d'avoir une composante de refermeture de la porte 7 par l'intermédiaire de la bielle 26.

Selon la figure 4, le panneau amont 22 est entraîné en rotation autour de l'axe 40, par des bielles menées 28 et 24, ces dernières étant mises en mouvement par la bielle menante 26 solidaire de la porte 7.

La disposition avantageuse conforme à l'invention est que le panneau amont 22 peut être actionné indépendamment de la porte 7 pendant la phase d'inversion. Le déplacement dudit panneau peut facilement être ajustable car il n'y a pas d'impératif de cinématique comme rencontré dans les résolutions connues antérieures, notamment par EP-A-0 413.635.

Il est à préciser, que l'orientation dudit panneau amont 22 en position jet inversé, est fonction de l'orientation de l'axe de rotation 40 par rapport à la structure fixe, et que son débattement angulaire est fonction de la position des points d'articulation 23, 27, 29 et 30, ainsi que de la longueur des bielles 24, 26 et 28. Tous ces paramètres concourent à positionner en mode jet inversé, le panneau amont 22 dans une position et suivant une orientation définies en fonction de l'effet recherché par l'homme de l'art. Ces paramètres sont également valables pour tous les systèmes proposés de l'invention.

L'effet remarquable dans la position en mode jet inversé est que l'orientation du panneau amont 22 peut être optimisée pour rester la plus proche possible du flux 14 afin de minimiser les perturbation engendrées par la présence dudit panneau dans le flux. Il est à noter, que des formes appropriées des parties amont et aval du panneau amont ainsi que de sa paroi interne 43 peuvent également permettre un guidage optimal du flux en position jet inversé.

Selon la figure 5, le panneau amont 22 est représenté en position jet direct 22-a-, et en position jet inversé 22-b-. L'implantation de l'axe de rotation 40 et des bielles 24, 26 et 28 ainsi que de leurs pivots associés, peut être réalisé inversé suivant l'axe 44 symbolisant le milieu de la porte 7, en fonction de l'effet recherché en mode jet inversé.

Selon une variante de réalisation de l'invention, la fonction de manoeuvre du panneau amont 22 peut être assurée par un vérin disposé entre la structure fixe 1 et le point d'entraînement 29 du panneau 22. Ledit vérin est de tout type connu, électrique, hydraulique, pneumatique, simple ou télescopique.

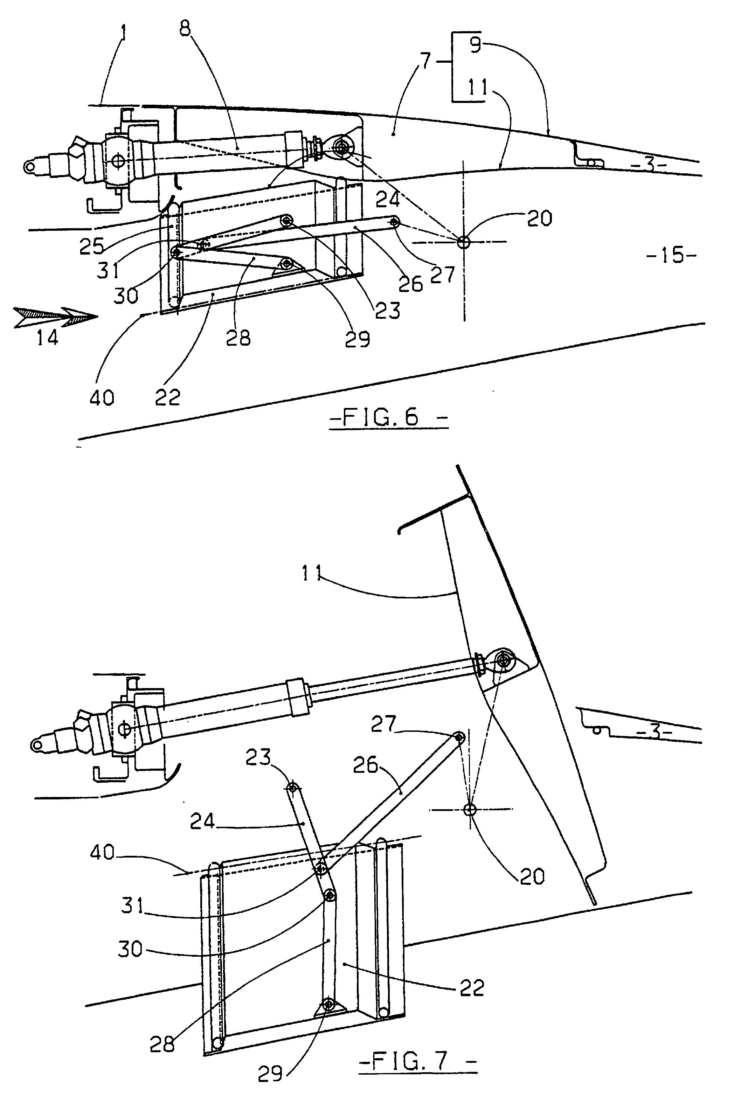

Les figures 6 et 7 représentent un autre mode de cinématique d'entraînement du panneau, de réalisation identique à celui décrit sur les figures 3 et 4, à l'exception du point d'accrochage 31 de la bielle menante 26, qui ne coïncide plus avec le point de liaison 30 des bielles 24 et 28. Dans le cas présent, le point d'accrochage 31 se situe en un point quelconque entre les deux extrémités 23 et 30 de la bielle 24. Ledit point 31 peut se situer dans la zone opposée à l'extrémité 30 de la bielle 24. Ces paramètres peuvent aussi bien être appliqués sur la bielle 28.

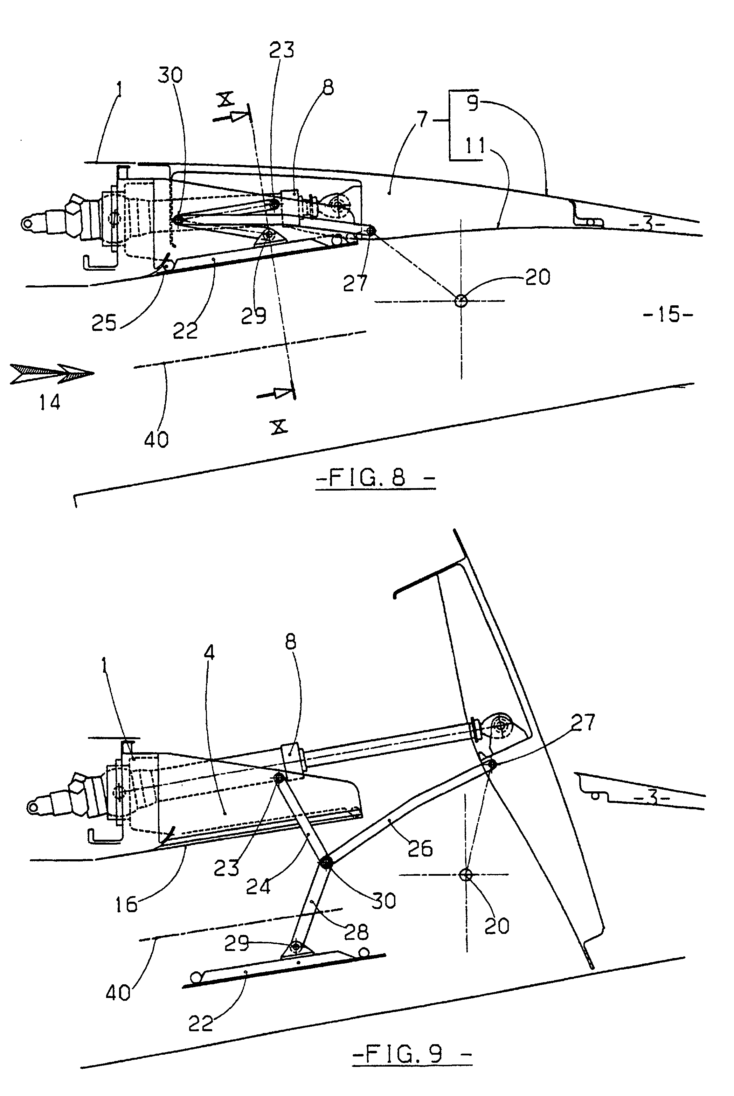

Selon un deuxième mode de réalisation de l'invention, les figures 8, 9 et 10 représentent un concept de cinématique identique à ceux décrits sur les figures 3, 4, 5, 6 et 7, mais associé à deux parties 12 et 22 de panneau par porte. Dans cette configuration la structure fixe 1 peut posséder une excroissance 4 dirigée vers l'aval, assurant l'étanchéité et la continuité du profil interne 16 entre, les deux panneaux en mode jet direct, et permettant également l'implantation des points pivots 23 sur ses flancs 41 et 42. L'élément 4, peut aussi être supporté par le vérin 8.

Dans le cas présente, les pivots 40 des deux parties 12 et 22 de panneau sont implantés d'une façon symétrique par rapport à l'axe 44 matérialisant le milieu de la porte (7), mais une implantation non symétrique peut être envisagée en fonction de l'effet recherché en position jet inversé.

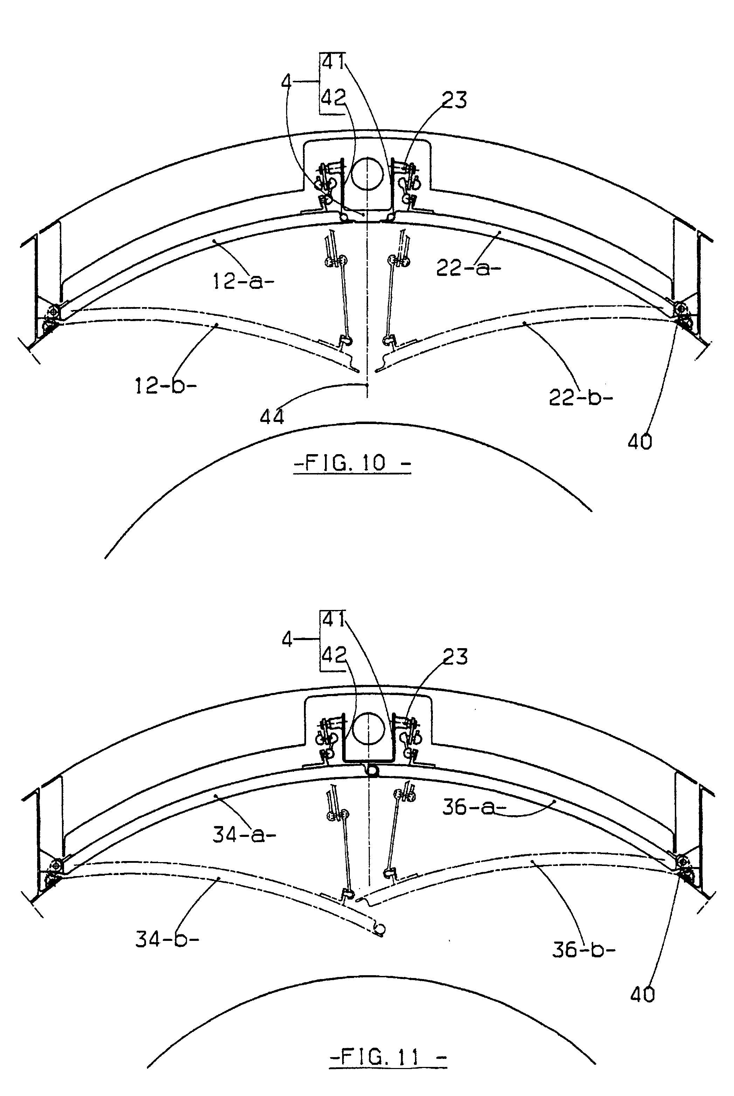

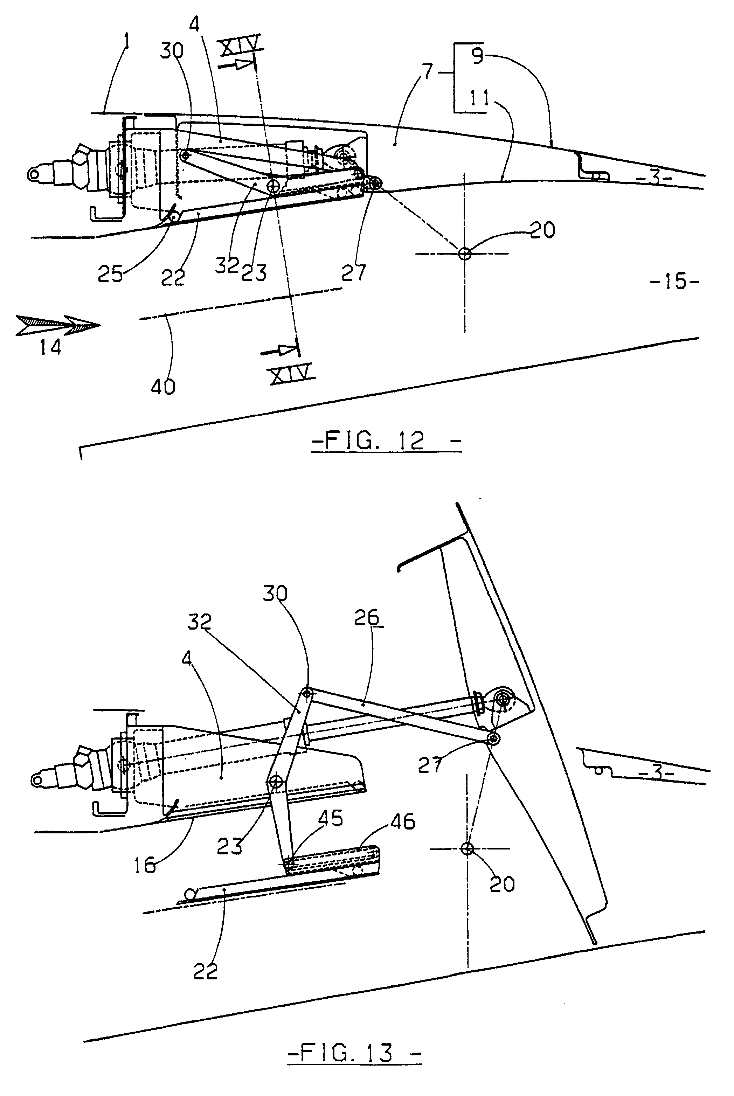

La figure 11, représente une section similaire à celle définie sur la figure 10 d'un système de manoeuvre proche de celui décrit sur les figures 8 et 9, appliqué à deux parties non symétriques 34 et 36 de panneaux. Ces deux parties de panneau se chevauchent en position jet direct, afin d'assurer l'étanchéité et la continuité du profil 16. Dans ce cas, afin d'éviter qu'ils n'interfèrent entre-eux lors de la phase d'ouverture, les cinématiques associées à chaque panneau sont différentes, ce qui entraîne des débattements angulaires différents entre les deux panneaux.

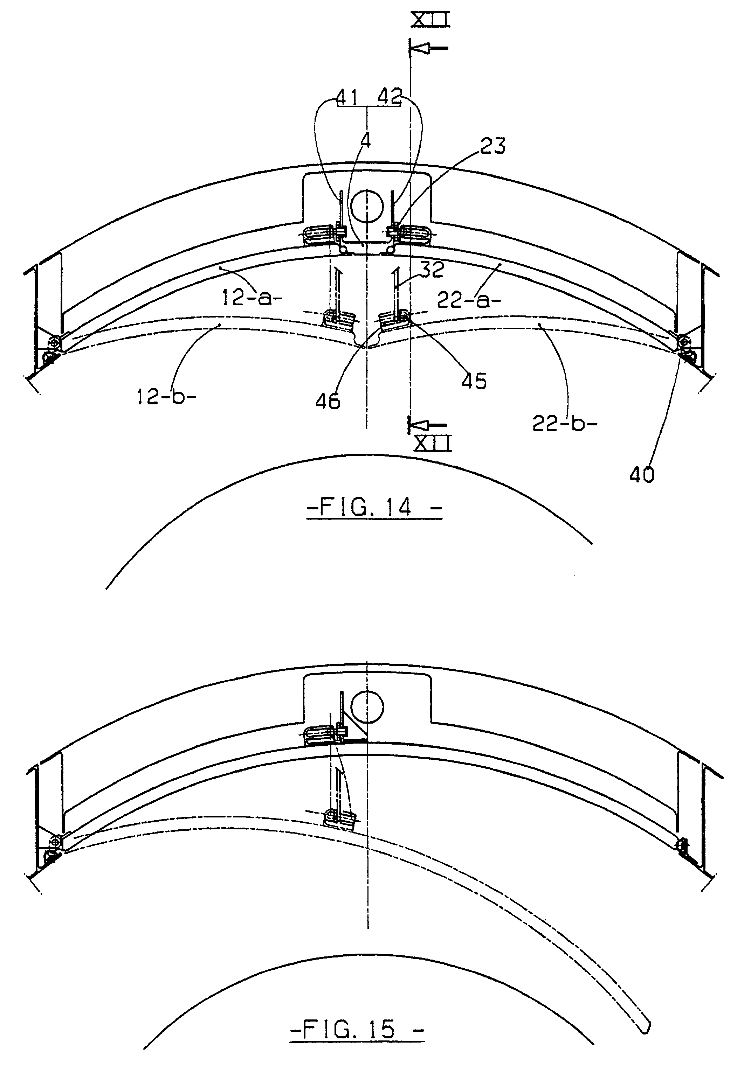

Sur les figures 12, 13 et 14 est représenté un autre système de manoeuvre associé à deux parties 12 et 22 de panneau par porte. Dans ce système, la bielle menante 26 solidaire de la porte au point pivot 27, commande, pour un panneau, un palonnier 32 par l'intermédiaire d'une liaison pivot 30. ledit palonnier 32, a son axe de pivotement 23 implanté sur un des flancs 41 ou 42 de la structure fixe 4. Il est équipé à son autre extrémité d'une liaison sphérique 45, qui entraîne, par l'intermédiaire d'une rampe 46 solidaire de la partie 22 de panneau ladite partie 22 en rotation autour de l'axe 40.

La figure 15 représente une section similaire à celle définie sur la figure 13, d'un système de manoeuvre identique à celui décrit sur les figures 11 et 12, mais appliqué à un seul panneau 22 par porte. Une cinématique identique à celle montrée sur la figure 10, peut aussi être appliquée.

Bien sûr, certains systèmes ou/et certaines configurations peuvent être utilisés seul ou en association entre-eux. Ceci est très remarquable dans le cas de pilotage de nappes par exemple car certaines associations peuvent permettre d'avoir un inverseur à portes associée à des panneaux 22 ayant des positions et des angles d'ouverture différents entre eux.

## Revendications

1. Inverseur de poussée de turboréacteur à double flux comportant des portes pivotantes (7), susceptibles en position fermée lors d'un fonctionnement en jet direct de s'intégrer dans la paroi extérieure du conduit de flux en arrière de la soufflante de turboréacteur, et susceptibles en outre chacune de pivoter sous l'action d'un moyen de commande (8) des déplacements de manière à constituer des obstacles de déviation de flux lors d'un fonctionnement en inversion de poussée, la partie amont de chaque porte (7) étant doublée sur sa face interne, en position fermée, par un panneau amont (22) assurant un lissage de la veine fluide en jet direct **caractérisé en ce que** le panneau amont (22) est supporté le long d'un côté latéral par un axe de rotation (40) placé dans un sens longitudinal et solidaire de la structure fixe (1) de l'inverseur et est entraîne par un ensemble de bielles (24,26,28,32) comportant au moins une articulation (27) solidaire de la porte (7), une articulation (23) portée par ladite structure fixe (1) et une articulation (29,45) solidaire dudit panneau amont (22) de manière que le déplacement du panneau amont (22) s'effectue suivant un pivotement latéral par rapport audit axe de rotation (40).

2. Inverseur de poussée de turboréacteur à double flux selon la revendication 1 dans lequel l'entraînement du panneau amont (22) est assuré par une première bielle (26) articulée à une extrémité sur un pivot (27) solidaire de la porte (7) et à son autre extrémité sur un pivot (30) commun à une deuxième bielle (24) dont l'autre extrémité est articulée sur un pivot (23) solidaire de la structure fixe (1) de l'inverseur et à une troisième bielle (28) dont l'autre extrémité est articulée sur un pivot (29) solidaire dudit panneau amont (22), les positions du panneau n(22) sont déterminées en fonction des effets recherchés par les longueurs de bielles (24,26,28) et les emplacements des pivots (23,27,29,30).

3. Inverseur de poussée de turboréacteur à double flux selon la revendication 1 dans lequel l'entraînement du panneau amont (22) est assuré par une première bielle (26) articulée à une extrémité sur un pivot (27) solidaire de la porte (7) et à son autre extrémité sur un pivot (31) situé en un point d'une deuxième bielle (24 ; 28) reliée par un pivot (30) à une troisième bielle (28 ; 24), lesdites deuxième (24 ; 28) et troisième bielles (28 ; 24) étant respectivement articulées l'une sur un pivot (23) solidaire de la structure fixe (1) de l'inverseur et l'autre sur un pivot (29) solidaire dudit panneau amont (22).

4. Inverseur de poussée de turboréacteur à double flux selon la revendication 1 dans lequel le panneau amont associé à la porte (7) est en deux parties (12,22), chaque partie de panneau (12,22) étant supportée le long d'un côté latéral par un axe de rotation (40) placé dans un sens longitudinal et solidaire de la structure fixe (1) de l'inverseur et est entraîné par une première bielle (26) articulée à une extrémité sur un pivot (27) solidaire de la porte (7) et à sont autre extrémité sur un pivot (30) commun à une deuxième bielle (24) dont l'autre extrémité est articulée sur un pivot (23) implanté sur les flancs (41,42) d'une excroissance (4) de la structure fixe (1) qui assure en outre l'étanchéité et la continuité de la surface de paroi externe (16) de la veine fluide entre les deux parties (12,22) de panneau en jet direct.

5. Inverseur de poussée de turboréacteur à double flux selon la revendication 4 dans lequel les pivots et bielles respectifs correspondant à chaque partie (12,22) de panneau sont symétriques par rapport à l'axe géométrique (44) de milieu de la porte (7).

6. Inverseur de poussée de turboréacteur à double flux selon la revendication 4 dans lequel les pivots respectifs (40) de support de chaque partie (12,22) de panneau sont disposés de facon non symétrique par rapport à l'axe géométrique (44) de milieu de la porte associée (7).

7. Inverseur de poussée de turboréacteur à double flux selon la revendication 4 dans lequel le système d'entraînement respectif à bielles et pivots de chaque partie (34,36) de panneau sont non symétriques par rapport à l'axe géométrique (44) de milieu de la porte associée (7) de manière que les débattements angulaires de chaque partie (34,36) de panneau en position de jet inversé sont différents et les rebords des deux parties (34,36) de panneau se chevauchent en position de jet direct.

8. Inverseur de poussée de turboréacteur à double flux selon la revendication 1 dans lequel le panneau amont associé à la porte (7) est en deux parties (12,22), chaque partie de panneau (12,22) étant supporté le long d'un côté latéral par un axe de rotation (40) placé dans un sens longitudinal et solidaire de la structure fixe (1) de l'inverseur et est entraîné par une bielle (26) articulée à une extrémité sur un pivot (27) solidaire de la porte (7) et à son autre extrémité sur un pivot (30) situé à l'extrémité d'un palonnier (32) pivotant autour d'un pivot (23) implanté sur les flancs (41,42) d'une excroissance (4) de la structure fixe (1) qui assure en outre l'étanchéité et la continuité de la surface de paroi externe (16) de la veine fluide entre les deux parties (12,22) de panneau en jet direct, ledit palonnier (32) étant équipé à son autre extrémité d'une liaison sphérique (45) coopérant avec une rampe (46) solidaire de la partie de panneau (12,22) afin d'assurer ses déplacements.

## Claims

1. Thrust reverser for a bypass turbojet engine comprising pivoting doors (7) capable, in the closed position, when operating in direct jet mode, of being incorporated into the outer wall of the flow duct behind the turbojet fan, and also each capable of pivoting under the action of a movement-control means (8) so as to form obstacles deflecting the flow when operating in reverse thrust mode, the upstream part of each door (7) being lined, on its internal face, in the closed position, by an upstream panel (22) which smoothes the fluid duct in direct jet mode, **characterized in that** the upstream panel (22) is supported along a lateral side by a rotation axle (40) placed in a longitudinal direction and secured to the fixed structure (1) of the reverser and is driven by a collection of link rods (24, 26, 28, 32) comprising at least one articulation (27) secured to the door (7), one articulation (23) borne by the said fixed structure (1) and one articulation (29, 45) secured to the said upstream panel (22) so that the upstream panel (22) moves in lateral pivoting with respect to the said rotation axle (40).

2. Thrust reverser for a bypass turbojet engine according to Claim 1, in which the upstream panel (22) is driven by a first link rod (26) articulated at one end to a pivot (27) secured to the door (7) and at its other end to a pivot (30) common to a second link rod (24) the other end of which is articulated to a pivot (23) secured to the fixed structure (1) of the reverser and to a third link rod (28) the other end of which is articulated to a pivot (29) secured to the said upstream panel (22), the positions of the panel (22) are determined according to the desired effects by the lengths of the link rods (24, 26, 28) and the locations of the pivots (23, 27, 29, 30).

3. Thrust reverser for a bypass turbojet engine according to Claim 1, in which the upstream panel (22) is driven by a first link rod (26) articulated at one end to a pivot (27) secured to the door (7) and at its other end to a pivot (31) situated at a point on a second link rod (24; 28) connected by a pivot (30) to a third link rod (28; 24), the said second (24; 28) and third link rod (28; 24), the said second (24; 28) and third (28; 24) link rods being articulated respectively, one of them, to a pivot (23) secured to the fixed structure (1) of the reverser and the other of them to a pivot (29) secured to the said upstream panel (22).

4. Thrust reverser for a bypass turbojet engine according to Claim 1, in which the upstream panel associated with the door (7) is made in two parts (12, 22), each panel part (12, 22) being supported along a lateral side by a rotation axle (40) placed in a longitudinal direction and secured to the fixed structure (1) of the reverser and is driven by a first link rod (26) articulated at one end to a pivot (27) secured to the door (7) and at its other end to a pivot (30) common to a second link rod (24) the other end of which is articulated to a pivot (23) installed on the flanks (41, 42) of a protrusion (4) of the fixed structure (1) which further provides the surface of the external wall (16) of the fluid duct between the two panel parts (12, 22) with sealing and continuity in the direct jet mode.

5. Thrust reverser for a bypass turbojet engine according to Claim 4, in which the respective link rods and pivots corresponding to each panel part (12, 22) are symmetric with respect to the geometric axis (44) of the middle of the door (7).

6. Thrust reverser for a bypass turbojet engine according to Claim 4, in which the respective pivots (40) supporting each panel part (12, 22) are arranged asymmetrically with respect to the geometric axis (44) of the middle of the associated door (7).

7. Thrust reverser for a bypass turbojet engine according to Claim 4, in which the respective link rod and pivot system driving each panel part (34, 36) are asymmetric with respect to the geometric axis (44) of the middle of the associated door (7) so that the angular excursions of each panel part (34, 36) in the reverse jet position differ and so that the edges of the two panel parts (34, 36) overlap in the direct jet position.

8. Thrust reverser for a bypass turbojet engine according to Claim 1, in which the upstream panel associated with the door (2) is made in two parts (12, 22), each panel part (12, 22) being supported along a lateral side by a rotation axle (40) placed in a longitudinal direction and secured to the fixed structure (1) of the reverser and is driven by a link rod (26) articulated at one end to a pivot (27) secured to the door (7) and at its other end to a pivot (30) situated at the end of a balance beam (32) pivoting about a pivot (23) installed on the flanks (41, 42) of a protrusion (4) of the fixed structure (1) which further provides the surface of the external wall (16) of the fluid duct between the two panel parts (12, 22) with sealing and continuity in the direct jet mode, the said balance beam (32) being equipped at its other end with a spherical connection (45) collaborating with a ramp (46) secured to the panel part (12, 22) so as to move it.

## Patentansprüche

1. Schubumkehrvorrichtung für ein Zweikreis-TL-Triebwerk mit Schwenkklappen (7), die geeignet sind, sich im Direktschubbetrieb in Schließstellung in die Außenwand der Strömungsleitung hinter dem Turbotriebwerkgebläse einzufügen, und die ferner geeignet sind, unter der Einwirkung eines Bewegungssteuermittels (8) jeweils dergestalt zu schwenken, dass sie im Schubumkehrbetrieb Stromumlenkhindernisse bilden, wobei der vordere Teil jeder Klappe (7) an der Innenseite in Schließstellung durch eine vordere Platte (22) verdoppelt wird, die im Direktschubbetrieb eine Glättung der Fluid-Strömungsbahn gewährleistet,
**dadurch gekennzeichnet,**
**dass** die vordere Platte (22) an einer Seitenkante durch eine Drehachse (40) gehalten wird, die in Längsrichtung angeordnet ist und mit dem feststehenden Aufbau (1) der Schubumkehrvorrichtung fest verbunden ist, und von einer Gruppe von Stangen (24, 26, 28, 32) bewegt wird, die mindestens ein Gelenk (27), das mit der Klappe (7) fest verbunden ist, ein Gelenk (23), das an dem genannten feststehenden Aufbau (1) sitzt, und ein Gelenk (29, 45), das mit der genannten vorderen Platte (22) fest verbunden ist, beinhaltet, so dass das Verschieben der vorderen Platte (22) in einer seitlichen Schwenkbewegung zu der genannten Drehachse (40) erfolgt.

2. Schubumkehrvorrichtung für ein Zweikreis-TL-Triebwerk nach Anspruch 1, wobei das Verschieben der vorderen Platte (22) durch eine erste Stange (26) gewährleistet wird, die mit einem Ende an einem Drehzapfen (27) angelenkt ist, der mit der Klappe (7) fest verbunden ist, und mit ihrem anderen Ende an einem Drehzapfen (30) angelenkt ist, den sie mit einer zweiten Stange (24), deren anderes Ende an einem mit dem feststehenden Aufbau (1) der Schubumkehrvorrichtung fest verbundenen Drehzapfen (23) angelenkt ist, sowie mit einer dritten Stange (28), deren anderes Ende an einem mit der genannten vorderen Platte (22) fest verbundenen Drehzapfen (29) angelenkt ist, gemeinsam hat, wobei die Stellungen der vorderen Platte (22) durch die mit den Längen der Stangen (24, 26, 28) und die Anordnungen der Drehzapfen (23, 27, 29, 30) erzielten Wirkungen erreicht werden.

3. Schubumkehrvorrichtung für ein Zweikreis-TL-Triebwerk nach Anspruch 1, wobei das Verschieben der vorderen Platte (22) durch eine erste Stange (26) gewährleistet wird, die mit einem Ende an einem Drehzapfen (27) angelenkt ist, der mit der Klappe (7) fest verbunden ist, und mit ihrem anderen Ende an einem Drehzapfen (31) angelenkt ist, der sich an einer Stelle einer zweiten Stange (24; 28) befindet, die durch einen Drehzapfen (30) mit einer dritten Stange (28; 24) verbunden ist, wobei diese zweite und dritte Stange (24; 28) an einem mit dem feststehenden Aufbau (1) der Schubumkehrvorrichtung fest verbundenen Drehzapfen (23) bzw. an einem mit der genannten vorderen Platte (22) fest verbundenen Drehzapfen (29) angelenkt sind.

4. Schubumkehrvorrichtung für ein Zweikreis-TL-Triebwerk nach Anspruch 1, wobei die mit der klappe (7) verbundene vordere Platte aus zwei Teilen (12, 22) besteht, wobei jeder Plattenteil (12, 22) an einer Seitenkante durch eine Drehachse (40) gehalten wird, die in Längsrichtung angeordnet ist und mit dem feststehenden Aufbau (1) der Schubumkehrvorrichtung fest verbunden ist, und von einer ersten Stange (26) bewegt wird, die mit einem Ende an einem mit der Klappe (7) fast verbundenen Drehzapfen (27) angelenkt ist und mit ihrem anderen Ende an einem Drehzapfen (30) angelenkt ist, den sie mit einer zweiten Stange (24) gemeinsam hat, deren anderes Ende an einem Drehzapfen (23) angelenkt ist, der an den Seitenflächen (41, 42) einer Ausstülpung (4) des feststehenden Aufbaus (1) eingesetzt ist, welche ferner im Direktstrahlbetrieb die Dichtigkeit und Kontinuität der Oberfläche der Außenwand (16) der Strömungsbahn zwischen den beiden Plattenteilen (12, 22) gewährleistet.

5. Schubumkehrvorrichtung für ein Zweikreis-TL-Triebwerk nach Anspruch 4, wobei die jeweiligen zu den Plattenteilen (12, 22) gehörigen Drehzapfen und Stangen bezogen auf die geometrische Mittelachse (44) der Klappe (7) symmetrisch sind.

6. Schubumkehrvorrichtung für ein Zweikreis-TL-Triebwerk nach Anspruch 4, wobei die entsprechenden Drehzapfen (40), die jeden Plattenteil (12, 22) halten, bezogen auf die geometrische Mittelachse (44) der jeweiligen Klappe (7) nicht symmetrisch angeordnet sind.

7. Schubumkehrvorrichtung für ein Zweikreis-TL-Triebwerk nach Anspruch 4, wobei die jeweiligen Bewegungssysteme jedes Plattenteils (34, 36) mit Stangen und Drehzapfen, bezogen auf die geometrische Mittelachse (44) der jeweiligen Klappe (7) nicht symmetrisch angeordnet sind, so dass die Winkelausschläge der Plattenteile (34, 36) in Umkehrschubstellung unterschiedlich sind und die Ränder der beiden Plattenteile (34, 36) sich in Direktstrahlstellung überlappen.

8. Schubumkehrvorrichtung für ein Zweikreis-TL-Triebwerk nach Anspruch 1, wobei die mit der Klappe (7) verbundene vordere Platte aus zwei Teilen (12, 22) besteht, wobei jeder Plattenteil (12,22) an einer Seitenkante durch eine Drehachse (40) gehalten wird, die in Längsrichtung angeordnet ist und mit dem feststehenden Aufbau (1) der Schubumkehrvorrichtung fest verbunden ist, und von einer ersten Stange (26) bewegt wird, die mit einem Ende an einem mit der Klappe (7) fest verbundenen Drehzapfen (27) angelenkt ist und mit ihrem anderen Ende an einem Drehzapfen (30) angelenkt ist, der sich am Ende eines Steuerhebels (32) befindet, der sich um einen Drehzapfen (23) dreht, der an den Seitenflächen (41, 42) einer Ausstülpung (4) des feststehenden Auftaus (1) eingesetzt ist, welche ferner im Direktstrahlbetrieb die Dichtigkdt und Kontinuität der Oberfläche der Außenwand (16) der Strömungsbahn zwischen den beiden Plattenteilen (12, 22) gewährleistst, wobei dieser Steuerhebel (32) an seinem anderen Ende mit einer Kugelverbindung (45) versehen ist, die mit einer mit dem Plattenteil (12,22) fest verbundenes Rampe (46) zusammenwirkt, um seine Bewegungen zu gewährleisten.
